# FASCICULE DE BREVET EUROPEEN

(11) **EP 3 631 745 B1**
(45) Date de publication et mention de la délivrance du brevet: **17.02.2021**
(21) Numéro de dépôt: 18723861.3
(22) Date de dépôt: 17.05.2018
(51) Int. Cl.: G06Q 50/06, G01D 4/00, G06F 8/65, H04L 29/00, H04L 29/08

(54) **MISE À JOUR DE LOGICIELS MÉTIERS ET/OU DE CONFIGURATIONS D'ÉQUIPEMENTS D'UN RÉSEAU DE DISTRIBUTION ÉLECTRIQUE**
AKTUALISIERUNG EINER HANDELSSOFTWARE UND/ODER KONFIGURATIONEN VON GERÄTEN EINES ELEKTRISCHEN VERTEILUNGSNETZES
UPDATING OF TRADE SOFTWARE AND/OR OF CONFIGURATIONS OF EQUIPMENT OF AN ELECTRICAL DISTRIBUTION NETWORK

(30) Priorité: 30.05.2017 FR 1754758
(43) Date de publication de la demande: 08.04.2020
(73) Titulaire: Electricité de France, 75008 Paris (FR)
(72) Inventeur: GILLAUX, Maxime, 35000 Rennes (FR)
(74) Mandataire: Plasseraud IP
(86) Numéro de dépôt international: PCT/EP2018/062957
(87) Numéro de publication internationale: WO 2018/219676

(56) Documents cités:
- EP-A1- 2 661 050
- EP-A1- 2 905 701
- US-A1- 2011 145 811
- US-A1- 2012 026 005
- US-A1- 2012 060 152
- US-A1- 2016 105 339
- US-A1- 2017 039 372
- US-B1- 9 063 818
- MACKIEWICZ R E: "Overview of IEC 61850 and Benefits", PES TD 2005/2006 MAY 21-24, 2006, PISCATAWAY, NJ, USA,IEEE, PISCATAWAY, NJ, USA, 21 mai 2006 (2006-05-21), pages 376-383, XP031331075, ISBN: 978-0-7803-9194-9
- - Anonymous: "Wikipédia: Multicast", , 1 novembre 2016 (2016-11-01), XP055481519, Extrait de l'Internet: URL:https://fr.wikipedia.org/w/index.php?t itle=Multicast&oldid=131324856 [extrait le 2018-06-06]

## Description

L'invention concerne le contrôle-commande d'équipements mis en œuvre dans un réseau de distribution électrique. Il peut s'agir typiquement d'équipements intelligents (de type dit « IED » pour « Intelligent Electronic Device ») communiquant via un réseau de contrôle-commande (dit « smartgrid »), chaque équipement formant un nœud de ce réseau de contrôle-commande.

En particulier, l'invention traite des mécanismes d'opération et maintenance de ces équipements (mécanismes dits « O&M ») et notamment des mécanismes de mise à jour de logiciels métiers (dits « firmware ») et/ou de mise à jour de divers fichiers de configuration plus généralement pour la gestion des fonctionnalités métiers de ces équipements, et ce dans tout ou partie des équipements distribués du réseau de contrôle-commande. On désigne donc ci-après par les termes « mise à jour de logiciel » aussi bien la mise à jour du firmware que celle de la configuration d'un équipement.

La mise à jour des équipements dans un réseau de contrôle-commande peut nécessiter un ordonnancement manuel. Ceci est valable aussi bien dans le cas d'une mise à jour de configuration, que de mise à jour de version de firmware.

Dans la mesure où les différents équipements sont interdépendants, une telle coordination vise à échelonner, voire synchroniser les mises à jour (à différents instants pour différents équipements) pour garantir une cohérence de fonctionnement entre les équipements tout au long du mécanisme de mise à jour.

Dans le cas d'un système où les différents équipements sont au contraire indépendants les uns des autres, un tel ordonnancement peut permettre par ailleurs d'échelonner les mises à jour dans le temps, en vue d'une planification et/ou d'une optimisation de la disponibilité des équipements, afin de mieux contrôler les canaux de télécommunication et éviter leur saturation éventuelle.

Le document EP2661050 concerne un procédé de mise à jour de Firmware de compteurs électriques dans lequel ni leur topologie, ni leurs fonctionnalités n'entrent en jeu.

La présente invention vient améliorer la situation.

Elle propose à cet effet un procédé mis en œuvre par des moyens informatiques de mise à jour de logiciels destinés à être exécutés par des équipements d'un réseau de distribution électrique. Chaque équipement forme un nœud d'un réseau de contrôle-commande communiquant avec d'autres nœuds du réseau de contrôle-commande. En particulier, le procédé comporte :
- une première étape dans laquelle des priorités respectives de mise à jour sont attribuées aux nœuds du réseau de contrôle-commande, et
- une deuxième étape dans laquelle tout ou partie des nœuds du réseau reçoivent des données de mise à jour, par ordre des priorités attribuées auxdits nœuds.

Ainsi, l'invention permet d'ordonnancer les mises à jour respectives des équipements du réseau, selon par exemple une hiérarchie de nœuds du réseau de contrôle-commande (par exemple depuis un nœud racine jusqu'à des nœuds feuilles) et/ou encore selon les fonctionnalités respectives des équipements dans le réseau de distribution électrique.

Ainsi, le procédé est mis en œuvre par une entité de gestion des mises à jour de logiciels des équipements du réseau, au moins en fonction d'une topologie du réseau de contrôle-commande et/ou de fonctionnalités respectives des équipements dans le réseau de distribution électrique.

Chaque nœud du réseau stocke une donnée relative à sa priorité à l'issue de la première étape, et transmet sa donnée de priorité à une entité de gestion des mises à jour de logiciels des équipements du réseau pour la mise en œuvre de la deuxième étape.

Dans une variante alternative qui ne fait pas partie de l'invention, l'entité précitée de gestion des mises à jour peut stocker elle-même les données de priorités respectives des équipements dans une base de données par exemple.

Sur réception des données des priorités respectives des nœuds, l'entité de gestion des mises à jour détermine un ordonnancement des mises à jour effectives des logiciels dans chaque nœud du réseau selon les priorités respectives attribuées auxdits nœuds.

Ces mises à jour « effectives » peuvent viser aussi bien la mise à jour du logiciel, une fois qu'elle est terminée, que l'exécution du logiciel ainsi mis à jour ensuite.

Dans une première forme de réalisation, la mise à jour de logiciel comporte une mise à jour de logiciel métier d'équipement du réseau.

Dans une deuxième forme de réalisation alternative ou complémentaire, la mise à jour de logiciel comporte une mise à jour de configuration d'équipement du réseau (par exemple par une mise à jour de fichiers informatiques qu'exploitent les logiciels qui sont exécutés par les équipements).

On comprendra ainsi que l'on entend par les termes « mis à jour de logiciel » aussi bien une mise à jour de logiciel métier qu'une mise à jour de fichiers informatiques qu'exploitent ces logiciels, ou encore qu'une mise à jour quelconque de logiciels qu'exécutent les équipements de façon plus générale.

Dans la première forme de réalisation précitée, la priorité d'un nœud pour la mise à jour du logiciel métier peut être définie par une donnée objet relative au nœud logique de type « LIFH » de la classe « Common Data Class ING » selon la norme IEC 61850.

Dans la deuxième forme de réalisation précitée, la priorité d'un nœud pour la mise à jour de configuration est définie par une donnée objet relative au nœud logique de type « LICH » de la classe « Common Data Class ING » selon la norme IEC 61850.

De telles réalisations, exploitant la norme précitée, permettent d'homogénéiser la répartition des informations des niveaux de priorité des nœuds du réseau, et ce de façon normalisée quels que soient la nature de l'équipement et/ou son fabricant.

La présente invention vise aussi un système comportant :
- au moins une entité de gestion des mises à jour de logiciels d'équipements d'un réseau de distribution électrique, pour une mise jour de logiciels destinés à être exécutés par des équipements du réseau de distribution électrique, chaque équipement formant un nœud d'un réseau de contrôle-commande communiquant avec d'autres nœuds du réseau de contrôle-commande, et
- un ou plusieurs équipements du réseau de distribution électrique, dans lequel chaque nœud du réseau stocke une donnée relative à une priorité de sa mise à jour, au moins en fonction d'une topologie du réseau de contrôle-commande et/ou de fonctionnalités respectives des équipements dans le réseau de distribution électrique.

En particulier, l'entité de gestion des mises à jour comporte un circuit informatique programmé pour exécuter les étapes du procédé défini ci-avant.

La présente invention vise aussi un équipement d'un réseau de distribution électrique d'un tel système, comportant en particulier un circuit informatique programmé pour :
- stocker une donnée relative à la priorité de cet équipement, et
- transmettre sur demande cette donnée de priorité à l'entité de gestion des mises à jour de logiciels des équipements du réseau.

L'invention vise aussi une entité de gestion des mises à jour de logiciels d'équipements d'un réseau de distribution électrique (chaque équipement formant un nœud d'un réseau de contrôle-commande communiquant avec d'autres nœuds du réseau de contrôle-commande). En particulier, l'entité de gestion des mises à jour comporte un circuit informatique programmé pour :
- attribuer des priorités respectives de mise à jour aux nœuds du réseau de contrôle-commande, et
- transmettre des données de mise à jour à tout ou partie des nœuds du réseau, par ordre des priorités attribuées auxdits nœuds.

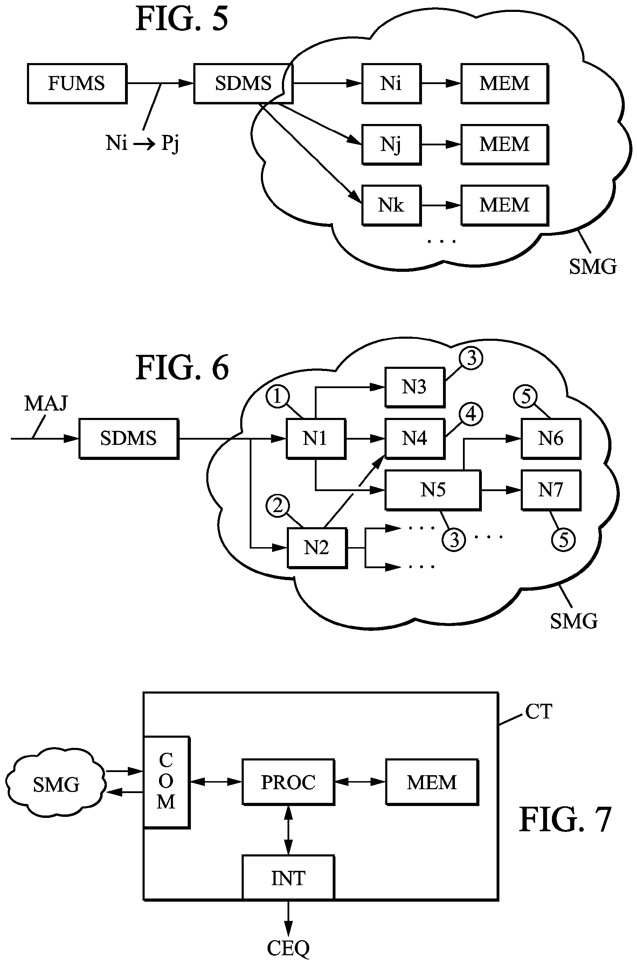

On a illustré à titre d'exemple un tel circuit informatique de l'équipement, ou bien encore de l'entité de gestion précitée, sur la figure 7. Ainsi, dans l'exemple illustré sur la figure 7, le circuit informatique CT de chacun de ces dispositifs peut comporter typiquement une interface de communication COM avec le réseau de contrôle-commande SMG, relié à un processeur PROC capable d'exécuter des opérations correspondant aux étapes du procédé ci-avant. À cet effet, le processeur PROC coopère avec une mémoire MEM stockant notamment des instructions d'un programme informatique au sens de l'invention, ainsi que des données de chaque niveau de priorité par exemple (pour les équipements du réseau). Le processeur PROC est relié en outre à une interface INT pour piloter une mise à jour du logiciel (le logiciel métier notamment ou le(s) fichier(s) de configuration) qu'exécute un module de commande de l'équipement CEQ, pour opérer le fonctionnement de l'équipement.

La présente invention vise aussi un programme informatique comportant des instructions (éventuellement réparties entre les différents équipements et entité précités) pour la mise en œuvre du procédé, lorsque ce programme est exécuté par un processeur.

D'autres avantages et caractéristiques de l'invention apparaîtront à la lecture de la description détaillée de modes de réalisation présentés ci-après à titre d'exemples non limitatifs, et à l'examen des dessins annexés sur lesquels :
- la figure 1 illustre schématiquement un système pour la mise en œuvre de l'invention,
- la figure 2 illustre très schématiquement les entité et équipements du système susceptibles de mettre en œuvre le procédé au sens de l'invention, selon un exemple de réalisation,
- la figure 3 illustre schématiquement les étapes d'un procédé au sens de l'invention, selon un exemple de réalisation,
- la figure 4 est un exemple de diagramme de séquence pour une mise à jour de logiciel selon le procédé de la figure 3,
- la figure 5 illustre schématiquement le système de la figure 1 dans une première étape globale, initiale, du procédé,
- la figure 6 illustre schématiquement le système de la figure 1 dans une deuxième étape globale, courante, du procédé,
- la figure 7 représente très schématiquement un exemple de structure type d'un équipement ou d'une entité de gestion pour la mise en œuvre de l'invention (en tant qu'équipement dont le logiciel est à mettre à jour, ou en tant qu'entité de gestion de ces mises à jour, cette entité pouvant plus généralement être en charge des opérations de maintenance des équipements du réseau).

L'invention propose ainsi un outil permettant une coordination automatique des mises jours (de logiciels notamment les logiciels métiers « firmware » et/ou de configuration) de chaque équipement, et ce quasiment en temps réel, sans requérir nécessairement une connaissance très fine des fonctionnalités et spécificités de chaque équipement du réseau de contrôle-commande au moment de ces mises à jour.

Cet outil comporte déjà l'ajout d'une ou plusieurs variables décrivant un paramètre de priorisation des mises à jour dans la norme régissant les réseaux de contrôle-commande IEC-61850.

En particulier, dans le modèle de données interne selon la norme IEC-61850 de chaque équipement, au moins un attribut (deux attributs dans l'exemple décrit) donne(nt) un niveau de priorité (par exemple une priorité de 1 à 5) lors des mises à jour du firmware et de la configuration. Ce niveau de priorité se matérialise par exemple sous la forme d'un nombre entier (entre 1 et 5 (bornes comprises), par exemple).

Par exemple, plus ce niveau de priorité est élevé plus l'équipement doit être traité de façon prioritaire lors des opérations de mise à jour. Ce niveau de priorité est attribué initialement à chaque équipement courant lors de la phase de configuration initiale de cet équipement courant. Par la suite, ce niveau peut être changé dynamiquement pour cet équipement courant par une simple mise à jour de son modèle de données.

Chaque équipement peut donc connaitre son propre niveau de priorité de mise à jour, et ce de façon comparée avec les autres équipements connectés au réseau de contrôle-commande.

Grâce aux différents services de communication permis par la norme IEC-61850, l'information de priorité peut être non seulement connue de l'équipement lui-même, mais peut aussi être accessible par un ou plusieurs dispositifs d'informations utilisant cette donnée de priorité pour la gestion du réseau smartgrid.

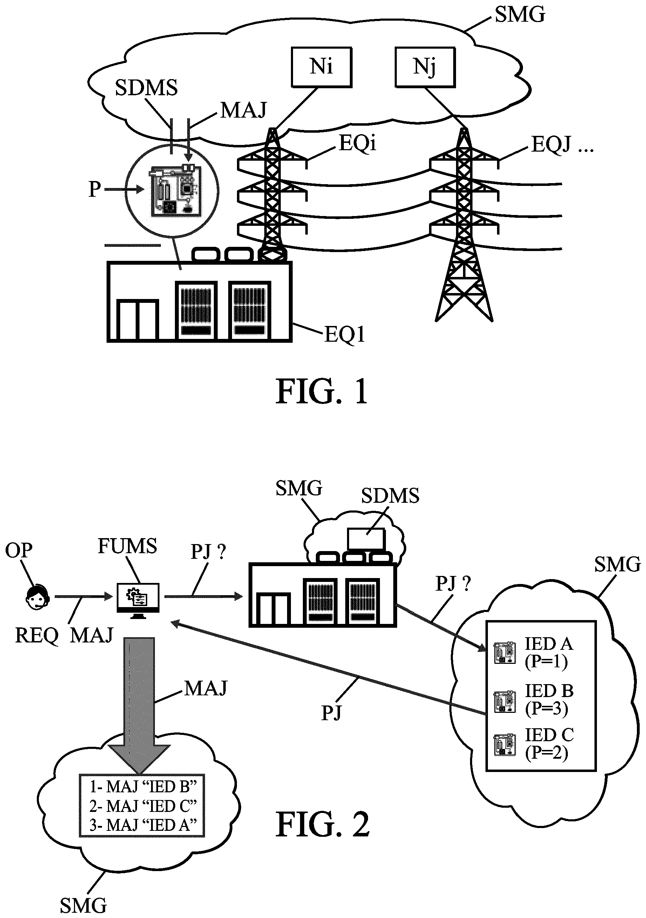

On a représenté sur la figure 1 un ensemble d'équipements EQ1, EQi, EQj d'un réseau de distribution d'électricité, tels que par exemple un poste transformateur HTA/BT, un ou plusieurs poteaux avec éventuellement des routeurs, jusqu'à des nœuds feuilles du réseau (non représentés). Ces équipements sont dits « intelligents » et en particulier comportent des moyens de communication entre équipements, au sein d'un réseau de télécommunication de type « smartgrid » SMG. Ainsi, chacun de ces équipements EQ1, EQi, EQj peut former un nœud SDMS, Ni, Nj, etc. du réseau SMG.

Par exemple, la référence SDMS de la figure 1 peut désigner un nœud central racine nommé « Smartgrid Device Management System », qui peut par exemple recevoir des niveaux de priorité P associés respectivement aux équipements et transmettre ces valeurs de niveau de priorité à chaque nœud Ni, Nj, etc., en aval du réseau pour y être stockées auprès des équipements.

En référence maintenant à la figure 5 illustrant cette situation, ces niveaux de priorité Pj de nœuds Ni du réseau smartgrid sont initialement et/ou dynamiquement établis. Par exemple, ces niveaux de priorité peuvent être initialement déterminés en fonction d'une topologie du réseau. Par exemple encore, ces priorités peuvent être déterminées dynamiquement à chaque installation d'un nouvel équipement EQi.

L'entité en charge de définir initialement ces priorités peut être à titre d'exemple non limitatif une entité de gestion du réseau FUMS (pour « Firmware Update Management System ») notamment en charge des mises à jour de logiciels (notamment les logiciels métiers ou « firmware ») qu'exploitent les équipements et/ou de leur configuration. Cette entité FUMS peut coopérer avec le nœud SDMS à cette fin.

Le nœud SDMS transmet alors à chaque nœud Ni le niveau de priorité Pj qui a été défini par l'entité FUMS pour le nœud Ni. Chaque nœud peut ensuite stocker la valeur de ce niveau de priorité en mémoire MEM (par exemple une valeur allant de 1 à 5).

En référence maintenant à la figure 6, le nœud SDMS, sur réception de l'entité FUMS d'une requête de mise à jour des logiciels des équipements, ou alternativement l'entité FUMS directement (comme illustré dans l'exemple de la figure 2 commenté ci-après), transmet au nœuds du réseau les données de mises à jour MAJ par ordre des priorités définies précédemment. Ainsi, dans l'exemple représenté, le nœud dispose d'une priorité maximale (1) par rapport au nœud N2 (priorité (2)). Le nœud N3, en aval du nœud N1, peut disposer logiquement d'une priorité inférieure (niveau (3)) à celle du nœud N1. Le nœud N4, aussi en aval du nœud N1, mais devant recevoir des données de mise à jour à la fois du premier nœud N1 et du deuxième nœud N2, se voit quant à lui attribuer une priorité inférieure (niveau (4)) à celle du nœud N3. Ainsi, on comprendra que la mise en œuvre de ces niveaux de priorité permet d'ordonnancer la transmission des données de mise à jour, et ce possiblement de plusieurs nœuds en amont N1, N2, pour la seule mise à jour d'un nœud en aval N4. Le nœud N5, situé en aval du nœud N1 comme le nœud N3, peut disposer du même niveau de priorité que le nœud N3 (niveau (3)). En revanche, les nœuds N6 et N7 qui sont en aval d'un nœud N5 peuvent avoir encore un niveau de priorité inférieur (niveau (5)), etc.

La figure 2 montre à titre d'exemple la mise à jour par un opérateur OP des équipements d'un réseau de contrôle-commande constitué de trois équipements dans cet exemple :
- Un équipement IED A qui a un niveau de priorité P=1 (le plus faible ici),
- IED B qui a un niveau de priorité P=3 (le plus fort ici),
- IED C qui a un niveau de priorité P=2 (deuxième plus fort niveau dans cet exemple).

L'opérateur OP entre (via une interface homme/machine typiquement) une demande de mise à jour auprès d'une entité FUMS d'assistance à la gestion de contrôle-commande, laquelle entité FUMS comporte un module de mise à jour de firmware et/ou de configurations respectives des équipements. L'entité FUMS peut être connectée au réseau de contrôle-commande SMG et demander directement aux équipements IED A, IED B, IED C, l'ordre de priorité qu'ils ont pu stocker en mémoire préalablement. Alternativement, l'entité FUMS est connectée au nœud racine SDMS en tête de réseau de contrôle-commande SMG, par exemple mais non limitativement le nœud de type « Smartgrid Device Management System » (ou « SDMS ») se présentant comme un nœud central racine, collectant alors les ordres de priorité (flèche « Pj ? » en aval du nœud SDMS sur la figure 2) auprès des équipements à travers le réseau de contrôle-commande SMG.

Alternativement encore, l'entité FUMS d'assistance à la gestion de contrôle-commande peut stocker en mémoire les ordres de priorité des équipements du réseau, sans besoin de solliciter les équipements pour les obtenir.

Ces ordres de priorité ont pu être déterminés respectivement à l'installation de chaque équipement du réseau, par exemple selon la topologie du réseau. L'ordre de priorité attribué à ce nouvel équipement peut être défini par exemple par l'installateur de l'équipement selon la fonctionnalité de l'équipement et son raccordement à d'autres équipements du réseau de contrôle-commande.

Cette étape est suivie ensuite d'un stockage en mémoire de l'ordre de priorité attribué ainsi à l'équipement nouvellement installé (en mémoire de l'équipement, ou directement auprès de l'entité FUMS (ou encore possiblement auprès du nœud racine SMDS) par exemple à réception d'un message de réussite d'installation de l'équipement, notifié par ce dernier à l'entité FUMS et comportant un ordre de priorité défini par l'installateur).

Ainsi, l'entité FUMS, pour une mise à jour de firmware et/ou de configuration, peut accéder aux ordres de priorité des équipements concernés par cette mise à jour. Une fois ces informations reçues (flèche « PJ » retournant à l'entité FUMS), l'entité FUMS peut alors ordonnancer la mise à jour (MAJ) comme suit :
- d'abord celle de l'équipement IED B,
- puis celle de l'équipement IED C, et
- enfin, celle de l'équipement IED A.

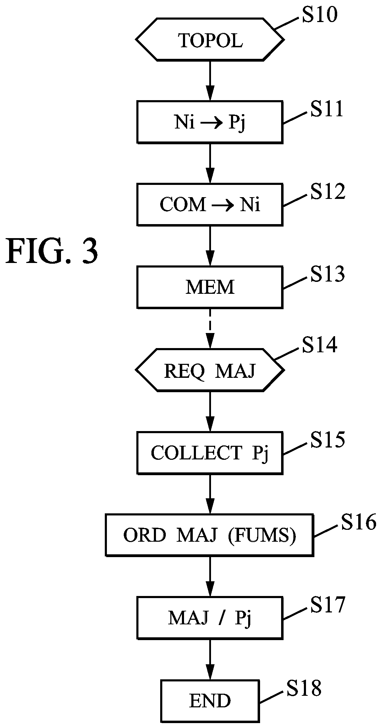

En référence maintenant à la figure 3 illustrant les étapes d'un exemple de procédé selon l'invention, ici mis en œuvre par l'entité FUMS, une première étape S10 consiste à obtenir des informations sur la topologie du réseau et, en fonction de ces informations, définir à l'étape S11 les niveaux de priorité respectifs pour chacun des équipements associés aux nœuds Ni du réseau smartgrid SMG. À l'étape S12, les valeurs de ces niveaux de priorité sont communiquées à ces nœuds Ni pour y être stockées en mémoire MEM à l'étape S13.

Une fois que cette étape globale, préalable, a été exécutée, pour une étape globale courante de mise à jour des logiciels métiers et/ou pour une mise à jour des configurations des équipements, l'entité FUMS reçoit à l'étape S14 une requête de mise à jour de l'opérateur OP, suite à quoi l'entité FUMS collecte les ordres de priorité Pj précédemment stockés auprès des nœuds Ni des équipements à l'étape S15. En fonction de ces niveaux de priorité Pj, l'entité FUMS est alors en mesure de préparer un ordonnancement des mises à jour à l'étape S16. Ensuite à l'étape S17, l'entité FUMS peut transmettre les données des mises à jour selon cet ordonnancement, par exemple via le nœud racine SDMS, en vue de la diffusion de ces données de mises à jour via le nœud racine et à destination des différents nœuds concernés Ni du réseau smartgrid SMG. Une fois les mises à jour installées, chaque nœud concerné peut émettre une notification de fin de mise à jour à destination de l'entité FUMS et le procédé peut s'arrêter à l'étape S18, une fois que tous les nœuds concernés ont été mis à jour.

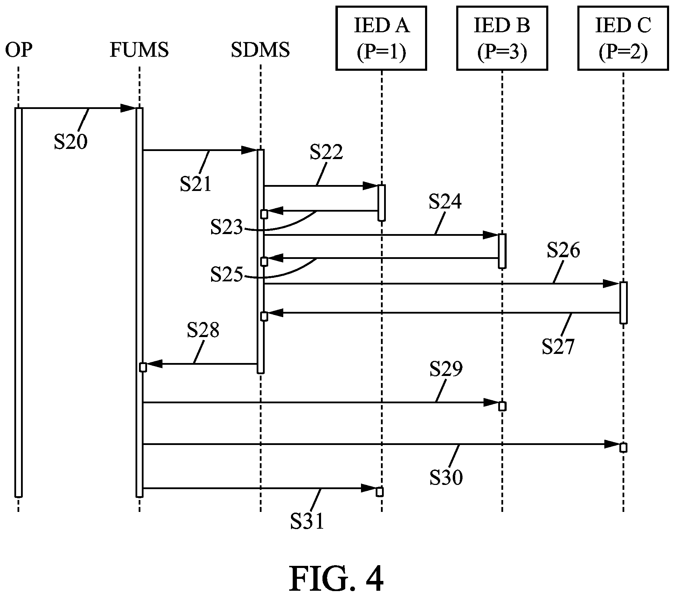

Le diagramme de séquence de la figure 4 illustre de façon plus fine les échanges mis en œuvre en particulier lors de l'étape globale courante d'une mise à jour. Au cours d'une première étape S20, l'opérateur OP de mise à jour du réseau de contrôle-commande transmet une demande de mise à jour du réseau de contrôle commande à l'entité de gestion des mises à jour FUMS, laquelle demande au nœud racine de contrôle-commande SDMS de mettre en œuvre une collecte des niveaux de priorité de chaque équipement à l'étape S21.

Ensuite, le nœud racine SDMS interroge individuellement :
- un premier équipement IED A à l'étape S22 pour obtenir son niveau de priorité et le nœud de l'équipement IED A notifie au nœud racine SMDS son niveau de priorité (ici P=1) à l'étape S23,
- un deuxième équipement IED B à l'étape S24 pour obtenir son niveau de priorité et le nœud de l'équipement IED B notifie au nœud racine SMDS son niveau de priorité (ici P=3 dans l'exemple décrit) à l'étape S25,
- un troisième équipement IED C à l'étape S26 pour obtenir son niveau de priorité et le nœud de l'équipement IED B notifie au nœud racine SMDS son niveau de priorité (ici P=2) à l'étape S27, etc.

Ensuite, une fois que le nœud racine SDMS a collecté toutes ces valeurs de niveau de priorité, l'ensemble des valeurs peut être notifié à l'étape S28 à l'entité de gestion FUMS. En fonction de ces valeurs de niveau de priorité respectives, l'entité FUMS peut ordonnancer et piloter ensuite les mises à jour de chaque équipement, par ordre de priorité :
- d'abord le nœud IED B à l'étape S29 (pour la première priorité la plus urgente P=3),
- ensuite le nœud IED C à l'étape S30 (pour la deuxième priorité P=2), et enfin
- le nœud IED A à l'étape S31 (pour la troisième priorité P=1).

Le cas d'utilisation est indifférent qu'il s'agisse d'une mise à jour de configuration ou de firmware.

De plus, cet ordonnancement de mise à jour peut de façon concrète correspondre aussi bien :
- à un ordonnancement des opérations de téléchargement de la mise à jour vers les équipements, et/ou
- à un ordonnancement des opérations d'activation de la mise à jour dans les équipements.

Ces deux ordonnancements peuvent être opérés de façon conjointe ou différée dans le temps.

En outre, comme indiqué ci-avant, ces ordonnancements sont définis en fonction de la topologie du réseau (manuellement par un opérateur, ou automatiquement par un programme informatique en fonction des fonctionnalités attribuées et des connexions de chaque équipement). Par exemple, la mise à jour de la configuration ou du firmware dans un poste électrique peut nécessiter un ordonnancement lors de la phase d'activation de cette nouvelle configuration/firmware dans chaque équipement composant le poste, et ce pour des raisons de sécurité, d'architecture matérielle ou logicielle et de dépendance associées. Par exemple, un poste de transformation moyenne tension/basse tension (ou « HTA/BT ») peut être composé de trois équipements comprenant un équipement IED maitre et deux équipements IED « extensions ». Les équipements extensions sont préférentiellement mis à jour avant l'équipement maître de façon à assurer une continuité de service dans la supervision du poste. Le niveau de priorité permet ainsi de définir cet ordonnancement lors de la phase de configuration, et ainsi piloter cet ordonnancement précis de façon automatique.

La mise en œuvre de la présente invention se manifeste notamment par une évolution du modèle de données selon la norme IEC61850 comprenant en particulier deux nouvelles variables de paramètres de type « data object » permettant d'attribuer à chaque équipement un niveau de priorité d'ordonnancement de la séquence de mise à jour de firmware et de configuration (un objet pour la mise à jour du firmware et un objet pour la mise à jour de la configuration).

Les parties de la norme concernées par cette évolution peuvent être par exemple :
- IEC 61850-7-4 (« Basic communication structure - Compatible logical node classes and data object classes »), et
- IEC-61850-90-16 ("Using IEC 61850 for System Management purposes").

Plus précisément, les deux nouveaux objets à définir peuvent être de type « Integer status setting » introduit dans la partie 7-3 de cette même norme.

Par exemple, dans la classe « Logical Node **LICH** » (« LICH » pour « Logical IED Configuration Handling »), on peut définir un nouveau paramètre de type « DataObject » nommé par exemple **"ConfUpdPrioLvl"** (pour « configuration update priority level ») de la classe « Common Data Class : Integer Status Setting » (abréviée par "**ING**"), comme présenté dans le tableau ci-après.

| Data object name | Common data class | Explanation | T | M/O/C |
|---|---|---|---|---|
| **CfgUpdPrioLvl** | ING | Configuration update priority level | | O |

De même, dans la classe « Logical Node **LIFH** » (IED Firmware Handling), on peut définir un nouveau paramètre de type « DataObject » nommé par exemple **"FwUpdPrioLvl"** (pour « firmware update priority level ») de la class « Common Data Class : Integer Status Setting » (abréviée par "**ING**"), comme présenté dans le tableau ci-après.

| Data object name | Common data class | Explanation | T | M/O/C |
|---|---|---|---|---|
| **FwUpdPrioLvl** | ING | Firmware update priority level | | O |

De manière générale, la présente invention ne se limite pas aux formes de réalisation décrites ci-avant à titre d'exemple ; elle s'étend à d'autres variantes.

Ainsi, on comprendra par exemple que la mise à jour des logiciels des équipements peut être ordonnancée par l'entité de gestion FUMS comme détaillé ci-avant, ou encore alternativement par le nœud racine SDMS qui reçoit alors dans cette réalisation alternative les données de mise à jour de l'entité FUMS et les transmet par ordre de priorité selon les niveaux de priorité collectés.

Alternativement encore, les données peuvent être transmises simultanément à tous les équipements avec des instructions de début de mise à jour respectives pour chaque équipement pour démarrer ces mises à jour à l'instant indiqué dans ces instructions.

## Revendications

1. Procédé mis en œuvre par des moyens informatiques de mise jour de logiciels destinés à être exécutés par des équipements d'un réseau de distribution électrique, chaque équipement formant un nœud d'un réseau de contrôle-commande communiquant avec d'autres nœuds du réseau de contrôle-commande,
le procédé comportant :
- une première étape dans laquelle des priorités respectives de mise à jour sont attribuées aux nœuds du réseau de contrôle-commande, au moins en fonction d'une topologie du réseau de contrôle-commande et/ou de fonctionnalités respectives des équipements dans le réseau de distribution électrique, et
- une deuxième étape dans laquelle tout ou partie des nœuds du réseau reçoivent des données de mise à jour, par ordre des priorités attribuées auxdits nœuds,
et dans lequel :
- chaque nœud du réseau stocke une donnée relative à sa priorité à l'issue de la première étape, et transmet sa donnée de priorité à une entité de gestion des mises à jour en vue de la mise en œuvre de la deuxième étape,
- sur réception des données des priorités respectives des nœuds, ladite entité de gestion des mises à jour détermine un ordonnancement des mises à jour effectives des logiciels dans chaque nœud du réseau selon les priorités respectives attribuées auxdits nœuds, et transmet selon cet ordonnancement les données de mise à jour à ladite tout ou partie des nœuds pour la mise en œuvre de la deuxième étape.

2. Procédé selon la revendication 1, dans lequel ladite mise à jour de logiciel comporte une mise à jour de logiciel métier d'équipement du réseau.

3. Procédé selon l'une des revendications précédentes, dans lequel ladite mise à jour de logiciel comporte une mise à jour de configuration d'équipement du réseau.

4. Procédé selon la revendication 3, dans lequel la priorité d'un nœud pour la mise à jour du logiciel métier est définie par une donnée objet relative au nœud logique de type « LIFH » de la classe « Common Data Class **ING** » selon la norme IEC 61850.

5. Procédé selon la revendication 3, dans lequel la priorité d'un nœud pour la mise à jour de configuration est définie par une donnée objet relative au nœud logique de type « LICH » de la classe « Common Data Class **ING** » selon la norme IEC 61850.

6. Système pour la mise en œuvre du procédé selon l'une des revendications précédentes, pour une mise jour de logiciels destinés à être exécutés par des équipements du réseau de distribution électrique, chaque équipement formant un nœud d'un réseau de contrôle-commande communiquant avec d'autres nœuds du réseau de contrôle-commande, le système comportant :
- au moins une entité de gestion des mises à jour de logiciels d'équipements d'un réseau de distribution électrique, pour effectuer ladite mise jour de logiciels, et
- un ou plusieurs équipements du réseau de distribution électrique,
dans lequel chaque nœud du réseau stocke une donnée relative à une priorité de sa mise à jour, au moins en fonction d'une topologie du réseau de contrôle-commande et/ou de fonctionnalités respectives des équipements dans le réseau de distribution électrique,
et, en vue d'une mise à jour, transmet sa donnée de priorité à ladite entité de gestion des mises à jour,
ladite entité de gestion des mises à jour comportant un circuit informatique programmé pour, sur réception des données des priorités respectives des nœuds, déterminer un ordonnancement des mises à jour effectives des logiciels dans chaque nœud du réseau selon les priorités respectives attribuées auxdits nœuds, et transmettre selon cet ordonnancement les données de mise à jour à tout ou partie des nœuds pour leur mise à jour.

7. Equipement d'un réseau de distribution électrique d'un système selon la revendication 6, comportant un circuit informatique programmé pour :
- stocker une donnée relative à la priorité dudit équipement, et
- transmettre sur demande ladite donnée de priorité à l'entité de gestion des mises à jour de logiciels des équipements du réseau.

8. Entité d'un système selon la revendication 6, de gestion des mises à jour de logiciels d'équipements d'un réseau de distribution électrique, chaque équipement formant un nœud d'un réseau de contrôle-commande communiquant avec d'autres nœuds du réseau de contrôle-commande,
ladite entité de gestion des mises à jour comportant un circuit informatique programmé pour :
- sur réception des données des priorités respectives des nœuds, déterminer un ordonnancement des mises à jour effectives des logiciels dans chaque nœud du réseau selon les priorités respectives attribuées auxdits nœuds, et- transmettre selon ledit ordonnancement les données de mise à jour à tout ou partie des nœuds du réseau pour leur mise à jour.

9. Programme informatique comportant des instructions pour la mise en œuvre du procédé selon l'une des revendications 1 à 5, lorsque ce programme est exécuté par un processeur.

## Patentansprüche

1. Von Computermitteln durchgeführtes Verfahren zur Aktualisierung von Softwareprogrammen, die dazu bestimmt sind, von Geräten eines Stromverteilungsnetzes ausgeführt zu werden, wobei jedes Gerät einen Knoten eines Steuerungsnetzes bildet, der mit anderen Knoten des Steuerungsnetzes kommuniziert,
das Verfahren aufweisend:
- einen ersten Schritt, bei dem jeweilige Aktualisierungsprioritäten den Knoten des Steuerungsnetzes wenigstens in Abhängigkeit von einer Topologie des Steuerungsnetzes und/oder von jeweiligen Funktionalitäten der Geräte im Stromverteilungsnetz zugewiesen werden, und
- einen zweiten Schritt, bei dem alle oder einige der Knoten des Netzes nach der Reihenfolge der Prioritäten, die den Knoten zugewiesen sind, Aktualisierungsdaten empfangen,
und wobei:
- jeder Knoten des Netzes ein Datenelement bezogen auf seine Priorität am Ende des ersten Schritts speichert und sein Prioritätsdatenelement an eine Einheit zur Verwaltung der Aktualisierungen im Hinblick auf die Durchführung des zweiten Schritts überträgt,
- bei Empfang der Daten der jeweiligen Prioritäten von den Knoten die Einheit zur Verwaltung der Aktualisierungen eine Planung der effektiven Aktualisierungen der Softwareprogramme in jedem Knoten des Netzes gemäß den jeweiligen Prioritäten bestimmt, die den Knoten zugewiesen sind, und gemäß dieser Planung die Aktualisierungsdaten an die allen oder einigen der Knoten zur Durchführung des zweiten Schritts überträgt.

2. Verfahren nach Anspruch 1, wobei die Software-Aktualisierung eine Aktualisierung einer Unternehmenssoftware eines Geräts des Netzes umfasst.

3. Verfahren nach einem der vorhergehenden Ansprüche, wobei die Software-Aktualisierung eine Konfigurationsaktualisierung eines Geräts des Netzes umfasst.

4. Verfahren nach Anspruch 3, wobei die Priorität eines Knotens für die Aktualisierung der Unternehmenssoftware von einem Objektdatenelement bezogen auf den logischen Knoten des Typs "LIFH" der Klasse "Common Data Class ING" gemäß der Norm IEC 61850 definiert ist.

5. Verfahren nach Anspruch 3, wobei die Priorität eines Knotens für die Konfigurationsaktualisierung von einem Objektdatenelement bezogen auf den logischen Knoten des Typs "LICH" der Klasse "Common Data Class ING" gemäß der Norm IEC 61850 definiert ist.

6. System zur Durchführung des Verfahrens nach einem der vorhergehenden Ansprüche für eine Aktualisierung von Softwareprogrammen, die dazu bestimmt sind, von Geräten des Stromverteilungsnetzes ausgeführt zu werden, wobei jedes Gerät einen Knoten eines Steuerungsnetzes bildet, der mit anderen Knoten des Steuerungsnetzes kommuniziert, das System aufweisend:
- mindestens eine Einheit zur Verwaltung der Aktualisierungen von Softwareprogrammen von Geräten eines Stromverteilungsnetzes zur Durchführung der Aktualisierung von Softwareprogrammen, und
- ein oder mehrere Geräte des Stromverteilungsnetzes, wobei jeder Knoten des Netzes ein Datenelement bezogen auf eine Priorität seiner Aktualisierung wenigstens in Abhängigkeit von einer Topologie des Steuerungsnetzes und/oder von jeweiligen Funktionalitäten der Geräte im Stromverteilungsnetz speichert,
und im Hinblick auf eine Aktualisierung sein Prioritätsdatenelement an die Einheit zur Verwaltung der Aktualisierungen überträgt,
wobei die Einheit zur Verwaltung der Aktualisierungen eine Datenverarbeitungsschaltung aufweist, die dafür programmiert ist, bei Empfang der Daten der jeweiligen Prioritäten der Knoten eine Planung der effektiven Aktualisierungen der Softwareprogramme in jedem Knoten des Netzes gemäß den jeweiligen Prioritäten zu bestimmen, die den Knoten zugewiesen sind, und gemäß dieser Planung die Aktualisierungsdaten an die allen oder einigen der Knoten für deren Aktualisierung zu übertragen.

7. Gerät eines Stromverteilungsnetzes eines Systems nach Anspruch 6, aufweisend eine Datenverarbeitungsschaltung, die dafür programmiert ist:
- ein Datenelement bezogen auf die Priorität des Geräts zu speichern, und
- auf Anfrage das Prioritätsdatenelement an die Einheit zur Verwaltung der Aktualisierungen von Softwareprogrammen der Geräte des Netzes zu übertragen.

8. Einheit eines Systems nach Anspruch 6 zur Verwaltung der Aktualisierungen von Softwareprogrammen von Geräten eines Stromverteilungsnetzes, wobei jedes Gerät einen Knoten eines Steuerungsnetzes bildet, der mit anderen Knoten des Steuerungsnetzes kommuniziert,
wobei die Einheit zur Verwaltung der Aktualisierungen eine Datenverarbeitungsschaltung aufweist, die dafür programmiert ist:
- bei Empfang der Daten der jeweiligen Prioritäten der Knoten eine Planung der effektiven Aktualisierungen der Softwareprogramme in jedem Knoten des Netzes gemäß den jeweiligen Prioritäten zu bestimmen, die den Knoten zugewiesen sind, und- gemäß der Planung die Aktualisierungsdaten an alle oder einige der Knoten des Netzes für deren Aktualisierung zu übertragen.

9. Computerprogramm, umfassend Anweisungen für die Durchführung des Verfahrens nach einem der Ansprüche 1 bis 5, wenn dieses Programm von einem Prozessor ausgeführt wird.

## Claims

1. A method implemented by computer means for updating software intended to be executed by equipment of an electrical distribution grid, where each equipment unit forms a node of a command-control network communicating with other nodes of this command-control network,
the method comprising:
- a first step in which the respective priorities for updating are assigned to the nodes of the command-control network, at least on the basis of a topology of the command-control network and/or of respective functionalities of the equipment units in the electrical distribution grid; and
- a second step in which all or part of the nodes of the network receive the update data in order of the priority assigned to said nodes,
and wherein:
- each node of the network stores the data item relative to the priority thereof at the outcome of the first step, and sends the priority data thereof to a software update management system for the network equipment for implementing the second step,
- upon receiving respective priority data from the nodes, said update management system determines an effective update sequence for the software in each node of the network according to the respective priorities assigned to said nodes, and transmits according to said sequence the update data to said all or part of the nodes for the implementation of the second step.

2. The method according to claim 1, wherein software update comprises a network equipment firmware update.

3. The method according to one of the previous claims, wherein software update comprises a network equipment configuration update.

4. The method according to claim 3, wherein the priority of a node for the firmware update is defined by a data object relating to the logical node of type "LIFH" of the Common Data Class **ING,** according to the IEC 61850 standard.

5. The method according to claim 3, wherein the priority of a node for the configuration update is defined by a data object relating to the logical node of type "LICH" of the Common Data Class **ING,** according to the IEC 61850 standard.

6. A system for implementing the method according to any of the preceding claims, for updating software intended to be executed by equipment of an electrical distribution grid, where each equipment unit forms a node of a command-control network communicating with other nodes of this command-control network, the system comprising:
- at least one equipment software update management system in an electric distribution grid, for doing said software update; and
- one or more equipment units of the electric distribution grid,
Wherein each of the nodes of the network stores a data relative to a priority for its updating, on the basis of at least a topology of the command-control network and/or of respective functionalities of the equipment units in the electrical distribution grid,
And, in view to an updating, transmits its priority data to said software update management system,
said update management system comprising a computer circuit programed to, upon receiving respective priority data from the nodes, determine an effective update sequence for the software in each node of the network according to the respective priorities assigned to said nodes, and to transmit according to said sequence the update data to said all or part of the nodes for their updating.

7. Equipment for an electric distribution grid for a system according to claim 6, comprising a computer circuit programed for:
- storing data about the priority of said equipment, and
- sending said priority data on request to the software update management system for the network equipment.

8. An equipment software update management system for an electric distribution grid, of a system according to claim 6, each equipment unit forming a node of the command-control network communicating with other nodes of the command-control network,
said update management system comprising a computer circuit programed to:
- upon receiving respective priority data from the nodes, determining an effective update sequence for the software in each node of the network according to the respective priorities assigned to said nodes, and
- transmitting according to said sequence the update data to said all or part of the nodes for their updating.

9. A computer program comprising instructions for implementing the method according to one of claims 1 to 5, when this program is executed by a processor.
